# EUROPÄISCHE PATENTANMELDUNG

(11) **EP 1 775 193 A2**
(43) Veröffentlichungstag der Anmeldung: **18.04.2007**
(21) Anmeldenummer: 06020919.4
(22) Anmeldetag: 05.10.2006
(51) Int. Cl.: B62B 3/14

(54) **Transportcontainer**

(30) Priorität: 11.10.2005 DE 102005049029
(71) Anmelder: WANZL METALLWARENFABRIK GMBH, D-89336 Leipheim (DE)
(72) Erfinder: Boxler, Oliver, 87719 Mindelheim (DE); Schaule, Dietmar, 86877 Walkertshofen (DE); Wanninger, Lothar, 87719 Mindelheim (DE)

(57) **Zusammenfassung**

Die Erfindung betrifft einen von Hand bewegbaren Transportcontainer (1), mit einem Fahrgestell (2), mit Rollen (6), wobei das Fahrgestell (2) üblicherweise Seitenwände (3) aufweist und mit Etagen (4) versehen ist, die zwischen den Seitenwänden (3) angeordnet sind und wobei jeder Transportcontainer (1) eine Trittstufenleiter (5) aufweist.

Die Erfindung zeichnet sich dadurch aus, dass in Nichtgebrauchslage ein erster Transportcontainer (1) in einen zweiten, gleichen Transportcontainer (1') Platz sparend einschiebbar ist.

## Beschreibung

Die Erfindung betrifft einen Transportcontainer mit den Merkmalen im Oberbegriff des Hauptanspruchs.

Zum Stand der Technik zählt ein Transportcontainer wie er beispielsweise in der deutschen Patentanmeldung DE 10 2004 026 011.7 beschrieben ist. Er weist zwei Seitenwände auf, in die Etagen eingelegt sind. Die Seitenwände sind mit einem Fahrgestell verbunden. Im Leerzustand können die Etagen hochgeklappt werden. Die Seitenwände werden dann nach innen geklappt. Ein Stapeln des Containers ist dadurch gegeben.

Der Vorgang des Stapelns erfordert jedoch durch das Hochklappen der Etagen viele Handgriffe und ist daher zeitaufwendig.

Die Aufgabe der Erfindung besteht darin, einen verbesserten Transportcontainer aufzuzeigen.

Die Erfindung löst die Aufgabe mit den Merkmalen im Hauptanspruch.

Der wesentliche Vorteil liegt darin, dass die Container ineinander schiebbar und somit stapelbar sind. Sie können bei Nichtgebrauch in hohem Maße verdichtet gelagert werden.

Üblicherweise ist an einem Transportcontainer eine Trittleiter angeordnet, um auch die höher gelegenen Etagen zu erreichen. Diese ist im Container integriert. Es besteht kein Überstand, der ergonomische Anforderungen wie beispielsweise die Beinfreiheit beim Schieben des Containers einschränken würde. Separate Griffbügel, wie sie bisher für das Erzielen der ergonomischen Anforderungen Einsatz fanden, sind nicht mehr notwendig.

Durch das Herunterklappen der Leiter ist weiterhin ein selbständiges Rollen des Containers ausgeschlossen. Der Einsatz eines separaten Feststellers ist daher nicht mehr notwendig.

Weitere Vorteile sind in der Beschreibung aufgeführt.

Die Erfindung wird anhand von Ausführungsbeispielen näher erläutert. Es zeigt
Fig. 1 einen Transportcontainer in 3-D-Darstellung in gebremstem Zustand;
Fig. 2 den gleichen Transportcontainer in 3-D-Darstellung in fahrbarem Zustand;
Fig. 3 mehrere solcher Transportcontainer in 3-D-Darstellung ineinander gestapelt;
Fig. 4 einen Transportcontainer von unten, sowie
Fig. 5, 6 und 7 weiterführende Varianten eines Transportcontainers.

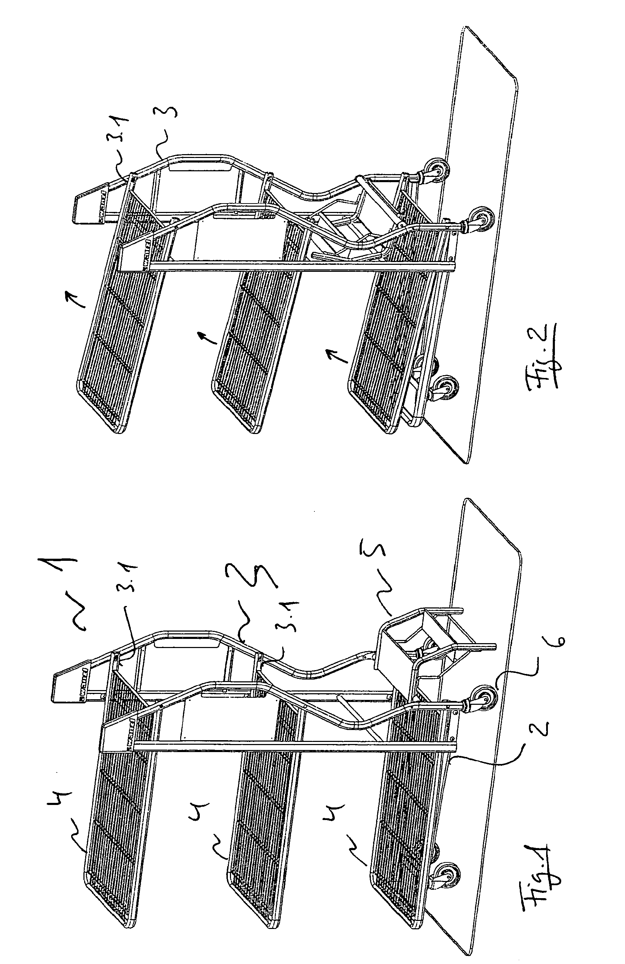

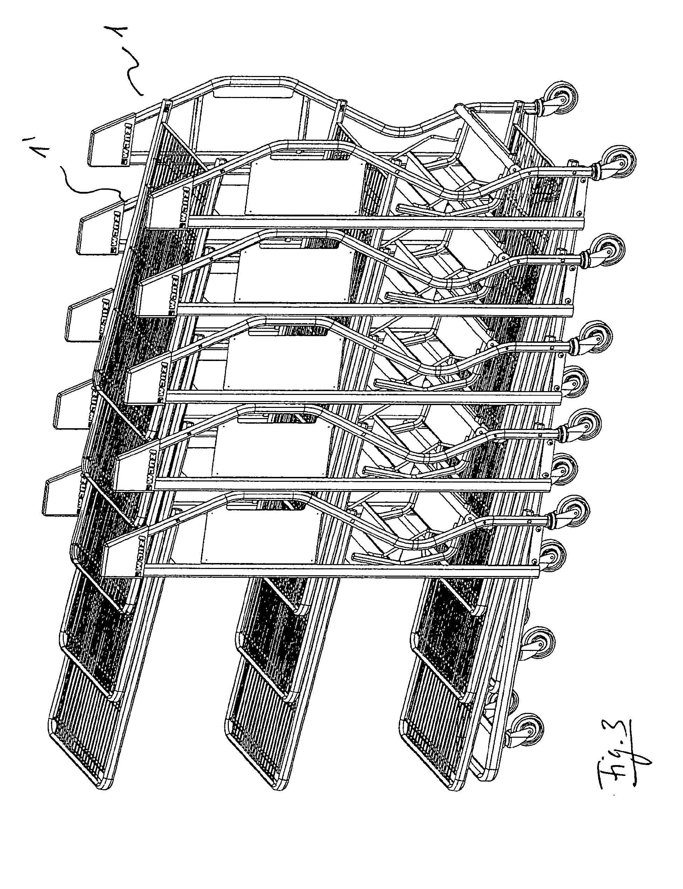

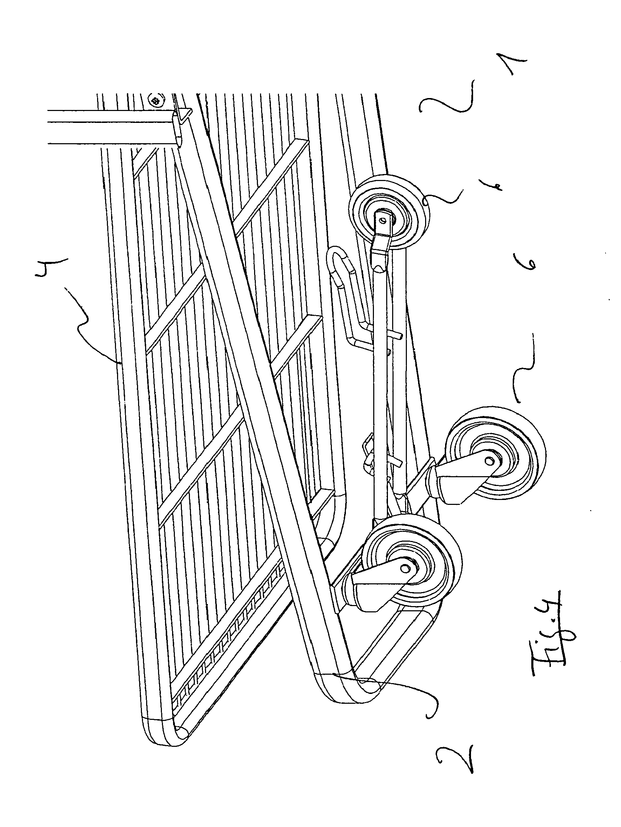

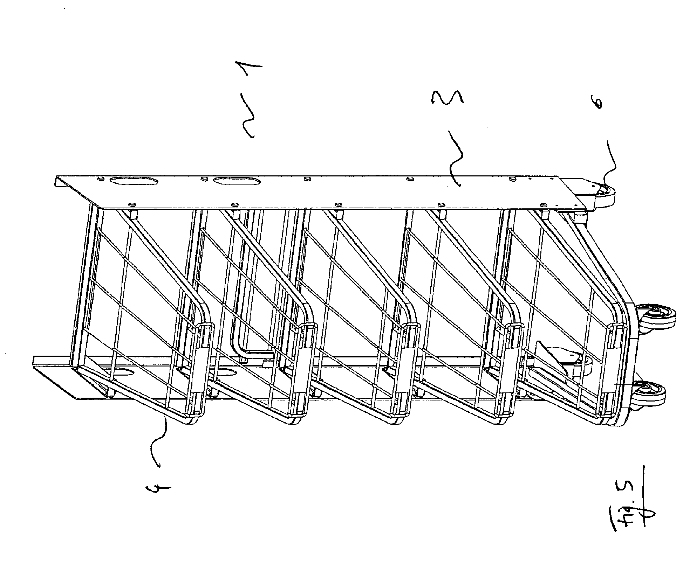

Fig. 1 zeigt einen Transportcontainer 1 mit einem Fahrgestell 2 und mit Seitenwänden 3. An den Seitenwänden 3 sind Etagen 4 angeordnet. Der Transportcontainer 1 weist vier Rollen 6 auf. Vorzugsweise findet eine weitere Rolle 6 Einsatz, um eine verbesserte Steuerbarkeit zu geben. Eine solche Anordnung ist in Fig. 4 beispielhaft dargestellt.

Der Transportcontainer 1 weist eine Trittstufenleiter 5 auf. Zum Bestücken ist sie, wie in Fig. 1 dargestellt, auf den Boden geklappt. Dadurch ist weiterhin ein Bremsmechanismus ausgelöst. Ein selbständiges Rollen des Containers 1 ist unterbunden. Insbesondere ist ein Bremsmechanismus vorgesehen, der die Rollen 6 blockiert. Dieser Bremsmechanismus wird über die Drehbewegung beim Herunterklappen der Trittstufenleiter 5 aktiviert. Vorzugsweise ist die Bremsmechanik in einer der Seitenwänden 3 untergebracht. Bei Nichtgebrauch ist die Trittstufenleiter 5 hochgeklappt und ist zwischen beiden Seitenteilen 3 angeordnet. Die Ausführung des Bremsmechanismus bleibt dem Fachmann überlassen.

Vorzugsweise sind sämtliche Etagen 4 identisch ausgeführt. Die Anzahl ist frei wählbar, vorzugsweise sind drei Etagen 4 vorzusehen. Jede Etage 4 ist an den Seitenteilen 3 gelagert. Im Gebrauch befinden sich die Etagen 4 in horizontaler Lage. Zum Ineinanderschieben werden die Etagen 4 angehoben. Vorzugsweise sind die Etagen 4 entlang einer Führungsschiene 3.1 beweglich gelagert. Diese Führungsschiene 3.1 ist zum Erfüllen der Stapelbarkeit notwendig. Zweckmäßigerweise ist die Führungsschiene 3.1 an der Innenseite jeder Seitenwand 3 vorgesehen. In Fig. 2 ist die Beweglichkeit der Etagen 4 dargestellt.

In Fig. 3 sind mehrere solcher Container 1,1' etc. ineinander gestapelt dargestellt.

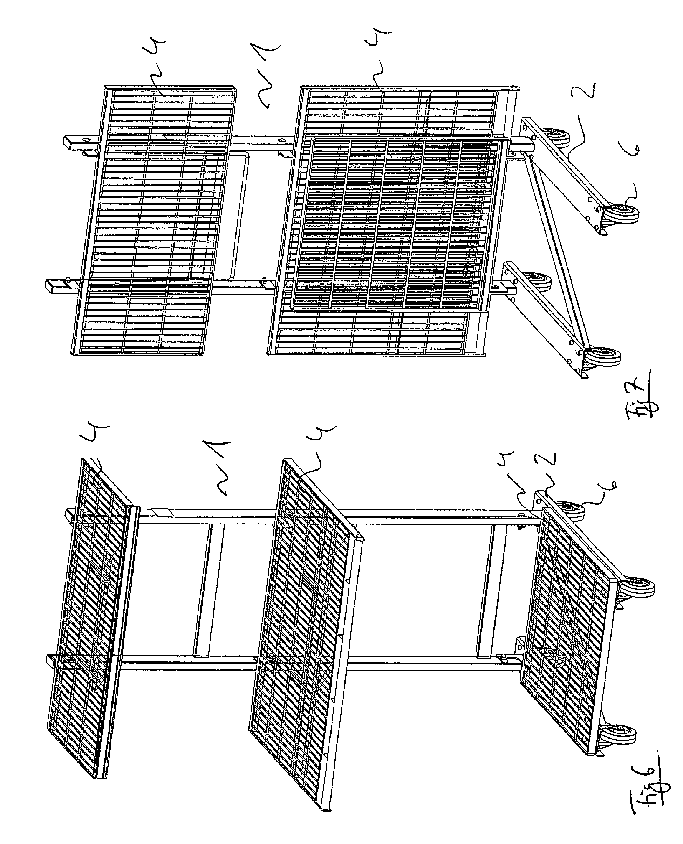

Die Seitenwände 3 sind derart ausgeführt, dass auch Bauteile wie Schreibplatten, Klemmbretter, Stiftmulden etc. integriert werden können. Auch wäre eine Seitenwand 3 denkbar, wie sie in Fig. 5 dargestellt ist.

In einer weiterführenden Ausführung ist jede Etage 4 wie bei einem Transportwagen ausgeführt. Hierbei erfolgt die Schrägstellung durch eine Federkraft und die Etage 4 erreicht erst bei Beladung die horizontale Position.

Die Lagerung der Etage 4 wäre dann entsprechend anzupassen. Ein Beispiel hierzu zeigt Fig. 1 oder 2 und Fig. 5.

Auch wäre denkbar, dass jede Etage 4 auf Holmen oder einem Rahmen aufliegt. Zum Stapeln könnte dann jede Etage 4 senkrecht nach oben geklappt werden. Beispiele einer solchen weiterführenden Variante sind in den Figuren 6 und 7 dargestellt.

### Bezugszeichenliste

- 1: Transportcontainer
- 1': einen gleichen weiteren Transportcontainer
- 2: Fahrgestell
- 3: Seitenwänden
- 3.1: Führungsschiene
- 4: Etagen
- 5: Trittstufenleiter
- 6: Rollen

## Patentansprüche

1. Von Hand bewegbarer Transportcontainer (1), mit einem Fahrgestell (2), mit Rollen (6), wobei das Fahrgestell (2) üblicherweise Seitenwände (3) aufweist und mit Etagen (4) versehen ist, die zwischen den Seitenwänden (3) angeordnet sind und wobei jeder Transportcontainer (1) eine Trittstufenleiter (5) aufweist, **dadurch gekennzeichnet, dass** in Nichtgebrauchslage ein erster Transportcontainer (1) in einen zweiten, gleichen Transportcontainer (1') Platz sparend einschiebbar ist.

2. Von Hand bewegbarer Transportcontainer nach Anspruch 1, **dadurch gekennzeichnet, dass** jede Seitenwand (3) eine Führungsschiene (3.1) aufweist.

3. Von Hand bewegbarer Transportcontainer nach Anspruch 1 oder 2, **dadurch gekennzeichnet, dass** jede Trittstufenleiter (5) zwischen den Seitenwänden (3) angeordnet ist.

4. Von Hand bewegbarer Transportcontainer nach einem der Ansprüche 1 bis 3, **dadurch gekennzeichnet, dass** vorzugsweise jede Trittstufenleiter (5) mit einem Bremsmechanismus versehen ist.

5. Von Hand bewegbarer Transportcontainer nach einem der Ansprüche 1 bis 4, **dadurch gekennzeichnet, dass** jede Seitenwand (3) vorzugsweise Aufnahmen für andere Bauteile wie Schreibplatten, Klemmbretter, Stiftmulden aufweist.
